# EUROPEAN PATENT SPECIFICATION

(11) **EP 2 732 587 B1**
(45) Date of publication and mention of the grant of the patent: **04.09.2019**
(21) Application number: 12797300.6
(22) Date of filing: 04.06.2012
(51) Int. Cl.: H04L 12/715, H04L 12/723, H04L 12/52, H04L 12/50, H04L 12/24, H04L 12/781, H04L 12/931

(54) **METHODS FOR SUPPORTING MIGRATION OF VIRTUAL MACHINES ACROSS MULTIPROTOCOL LABEL SWITCHING NETWORK AND CORRESPONDING DEVICES**
VERFAHREN ZUR UNTERSTÜTZUNG DER MIGRATION VIRTUELLER MASCHINEN IN EINEM MEHRPROTOKOLL LABEL-SWITCHING-NETZWERK UND ENTSPRECHENDE VORRICHTUNGEN
PROCÉDÉS DE PRISE EN CHARGE DE MIGRATION DE MACHINES VIRTUELLES DANS UN RÉSEAU À COMMUTATION MULTIPROTOCOLE PAR ÉTIQUETTE ET DISPOSITIFS CORRESPONDANTS

(30) Priority: 08.06.2011 CN 201110153072
(43) Date of publication of application: 21.05.2014
(73) Proprietor: Alcatel Lucent, 91620 Nozay (FR)
(72) Inventor: LIANG, Zheng, Shanghai Shanghai 201206 (CN); ZHENG, Jun, Shanghai Shanghai 201206 (CN); YAO, Chunyan, Shanghai Shanghai 201206 (CN); BIN, Fanxiang, Shanghai Shanghai 201206 (CN); WEN, Haibo, Shanghai Shanghai 201206 (CN)
(74) Representative: Louis Pöhlau Lohrentz
(86) International application number: PCT/IB2012/001334
(87) International publication number: WO 2012/168795

(56) References cited:
- EP-A1- 2 164 209
- CN-A- 1 722 698
- CN-A- 101 052 207
- CN-A- 101 552 727
- US-A1- 2008 163 207
- US-A1- 2009 327 392
- Timothy Wood: "CloudNet: Dynamic pooling of cloud resources by live WAN migration of virtual machines", , 11 March 2011 (2011-03-11), XP055018719, Retrieved from the Internet: URL:http://delivery.acm.org/10.1145/196000 0/1952699/p121-wood.pdf?ip=145.64.134.245& acc=ACTIVE SERVICE&CFID=83748450&CFTOKEN=67863276&__a cm__=1328695210_26e756df518248a27119b55670 de7945 [retrieved on 2012-02-08]
- CHRISTOPHER CLARK ET AL: "Live Migration of Virtual Machines", INTERNET CITATION, 2 April 2005 (2005-04-02), pages 273-286, XP002662867, Retrieved from the Internet: URL:http://www.usenix.org/event/nsdi05/tec h/full_papers/clark/clark.pdf [retrieved on 2011-10-28]

## Description

### Technical Field of the Invention

The present invention relates to communication technology, more particularly, to methods for supporting migration of virtual machines (VMs) across multiprotocol label switching network and corresponding devices.

### Background of the Invention

Cloud Computing has emerged with the development of the traditional computer technologies and network technologies such as Grid Computing, Distributed Computing, Parallel Computing, Utility Computing, Network Storage Technologies, Virtualization, Load Balance, etc. It is intended to integrate multiple low-cost computing entities into one system with powerful computing capability through the network, and distribute such powerful computing capability to end users with the help of such modes as SaaS (Software-as-a-Service), PaaS (Platform-as-a-Service), IaaS (Infrastructure-as-a-Service), MSP (Manage Service Provider), etc.

The virtualization technology can perform re-mapping of virtual machines and physical resources based on variation in workload by encapsulating services into the virtual machines and mapping them to the physical resources, namely a cloud center, thereby dynamically realizing the workload balance of the whole system. That is, the virtual machines may be dynamically migrated from one cloud center to another so as to realize the workload balance of the system.

From users' point of view, no matter how the virtual machines are migrated, their services should be continuous during the virtual machine migrations.

In practice, multiprotocol label switching (MPLS) network can be employed to interconnect the respective cloud centers.

EP2164209 A1 is about supporting migration of virtual machines across MPLS.

### Summary of the Invention

The purpose of the present invention is to provide a solution to support the migration of the virtual machines across the multiprotocol label switching network. The invention is defined in the independent claims. Additional features of the invention are provided in the dependent claims. Embodiments and/or examples disclosed in the following description which are not covered by the appended claims are considered as not being part of the present invention.

With the present invention, no complex registration hierarchy is needed. Furthermore, the virtual machine has no need to get aware of the registration hierarchy and only a few registration signaling and processes involve the virtual machine.

### Brief Description of the Drawings

Other objects and effect of the present invention will become more apparent and comprehensive from the following description in conjunction with drawings and with the full understanding of the present invention, in which:
Fig.1 illustratively shows an environment in which an embodiment of the present invention may be implemented;
Fig.2 shows virtual machine migration enablement function discovery and registration process according to an embodiment of the present invention;
Fig.3 illustratively shows the format of an ICMP router solicitation message according to an embodiment of the present invention;
Fig.4 illustratively shows the format of an ICMP router advertisement message according to an embodiment of the present invention;
Fig.5a illustratively shows the basic encoding format of MP_REACH_VMB;
Fig.5b illustratively shows the basic encoding format of MP_UNREACH_VMB;
Fig.5c illustratively shows a virtual machine binding update extension field;
Fig.6 shows the related process when a client initiates a communication with a virtual machine;
Fig.7 illustratively shows the basic encoding format of MP_VMB_QUERY;
Fig.8 illustratively shows the basic encoding format of MP_VMB_NTFC;
Fig.9 illustratively shows the related process when the virtual machine is being migrated according to an embodiment of the present invention;
Fig.10 illustratively shows the related process when the virtual machine is being migrated according to another embodiment of the present invention;
Fig.11 shows a block diagram of the label edge router according to an embodiment of the present invention;
Fig.12 shows a block diagram of the area route reflector according to an embodiment of the present invention.

The same reference number refers to the same, similar or corresponding feature or function throughout the above drawings.

### Detailed Description of the Preferred Embodiments

Now the preferred embodiments of the present invention are described in detail in conjunction with the accompany drawings.

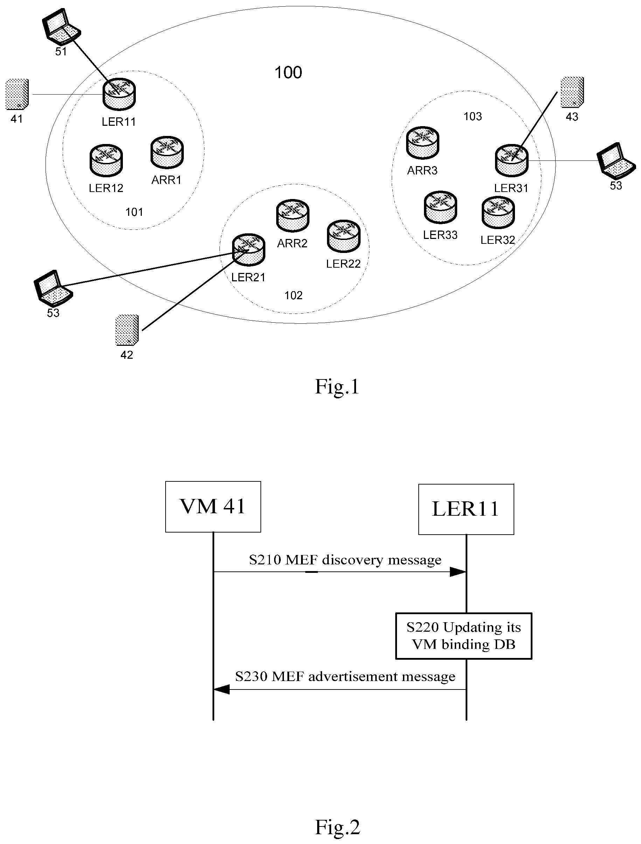

Fig.1 illustratively shows the environment in which an embodiment of the present invention may be implemented.

As shown in Fig.1, the MPLS network 100 for a service provider is divided into three serving areas 101, 102, 103. The serving area 101 includes one area route reflector ARR 1 and two label edge routers LER 11, LER 12. The serving area 102 includes one area route reflector ARR 2 and two label edge routers LER 21, LER 22. The serving area 103 includes one area route reflector ARR 3 and three label edge routers LER 31, LER 32, LER 33.

Assume that the virtual machine 41 is currently registered with the LER 11, the virtual machine 42 is currently registered with the LER 21, and the virtual machine 43 is currently registered with the LER 31. More specifically, the virtual machine 41 is instantiated at a cloud center connected to the LER 11, the virtual machine 42 is instantiated at a cloud center connected to the LER 21, and the virtual machine 43 is instantiated at a cloud center connected to the LER 31, these cloud centers are not shown in Fig.1. In addition, assume that the client 51 that wishes to communicate data packets with the virtual machine is connected to the LER 11, the client 52 is connected to the LER 21, and the client 53 is connected to the LER 31.

To support the VM migration, the LERs and ARRs in each serving area are implemented with migration enablement function (MEF), as will be described in detail below.

Considering extensibility, the ARR is introduced in the embodiments of the present invention as described below. The ARR is used to limit the direct transmission of some messages between the LERs, instead, these messages are forwarded via the ARR. That is to say, some messages are not directly transmitted between the LERs, instead, they are transmitted between the LER and the ARR or between the ARRs, as will be described in detail below.

In addition, it is to be noted that although the interconnections between the LERs are not shown in Fig.1, the LERs are capable of communicating with each other through label switching paths (LSPs) established therebetween. Similarly, although the interconnections between the ARRs are not shown in Fig.1, the ARRs are capable of communicating with each other through label switching paths (LSPs) established therebetween. And, although the connections between each LER and the ARR in an area where the LER is located are not shown in Fig.1, each LER and the ARR in the area where the LER is located can communicate with each other.

Of course, it should be appreciated by those skilled in the art that the ARR is not necessary in other embodiments of the present invention.

In the embodiments of the present invention, some public IP addresses are reserved, which define virtual machine identifiers (VMIDs) supporting the VM migration. These VMIDs are meaningless for all the intermediate label switching routers (LSRs) not shown in Fig.1. That is to say, in the embodiments of the present invention, forwarding equivalence class (FEC) of the data packet destined to the virtual machine is determined by an ingress LER for the data packet based on the IP address of the LER with which the virtual machine is registered, and is independent of the IP address of the virtual machine itself.

The embodiments of the present invention will be described below taking IPv4 for example. However, those skilled in the art should understand that the present invention is not limited to IPv4, and also applicable to IPv6.

Table 1 shows the assumed IP addresses of the VMs, LERs and ARRs in the MPLS network 100 shown in Fig.1.

**Table 1**

| Node | IP address |
|---|---|
| VM 41 | 210.101.34.25 |
| VM 42 | 210.101.34.30 |
| VM 43 | 210.101.34.35 |
| LER 11 | 211.140.111.1 |
| LER 12 | 211.140.222.1 |
| ARR 1 | 211.136.10.1 |
| LER 21 | 212.140.111.1 |
| LER 22 | 212.140.222.1 |
| ARR 2 | 212.136.10.1 |
| LER 31 | 213.140.111.1 |
| LER 32 | 213.140.222.1 |
| LER 33 | 213.140.233.1 |
| ARR 3 | 213.136.10.1 |

Fig.2 shows the virtual machine migration enablement function discovery and registration process according to an embodiment of the present invention.

Assume that the virtual machine migration enablement function discovery and registration process shown in Fig.2 is executed between the VM 41 and the LER 11. Those skilled in the art should understand that the virtual machine migration enablement function discovery and registration processes between the VM 42 and the LER 21 and between the VM 43 and the LER 31 are similar to the process shown in Fig.2. In addition, the virtual machine migration enablement function discovery and registration process shown in Fig.2 is not only applicable to the MEF discovery and registration initiated by the VM for the first time, but also applicable to the MEF discovery and registration initiated when the VM is being migrated.

Firstly, at step S210, the first LER, namely LER 11, receives a migration enablement function (MEF) discovery message from the first virtual machine (i.e. VM 41) that wishes to register with the first LER.

When the LER 11 discovers that the VMID contained in the MEF discovery message falls within the IP address range for supporting the migration of the virtual machine, at step S220, the first LER updates its own virtual machine binding database to reflect the binding of the first virtual machine to the first LER.

Finally, at step S230, the first LER sends a MEF advertisement message to the first virtual machine to indicate completion of the registration of the first virtual machine.

The virtual machine is only registered with the routers at the edge of the MPLS network, i.e. the LERs. That is to say, the MEF discovery and registration process will not be extended to the intermediate LSRs behind the LERs.

The MEF discovery message may be sent through an ICMP (Internet Control Message Protocol) router solicitation message.

More specifically, the ICMP router solicitation message may be extended to send the MEF discovery message.

For the ICMP router solicitation message, the ICMP Type field should be set to "10". The ICMP router solicitation message is identified as being used to send the MEF discovery message by setting the ICMP Code field of the ICMP router solicitation message with the unused value C1 or other value.

The MEF discovery message may carry the following information, including but not limited to:
1) Type Flag;
2) Virtual Machine ID;
3) Last LER ID;
4) Last ARR ID;
5) Association ID.

The Type Flag "0" indicates that this message is the MEF discovery message. The Virtual Machine ID indicates the IP address of the virtual machine to be registered, and the LER will register this virtual machine only when the VM ID is within a specified range. The Last LER ID indicates the IP address of the LER with which the virtual machine is lastly registered before the current registration. When the virtual machine initiates the MEF discovery and registration for the first time, the Last LER ID equals to "0". The Last ARR ID indicates the IP address of the ARR of the area where the LER with which the virtual machine is lastly registered prior to the current registration is located. When the virtual machine initiates the MEF discovery and registration for the first time, Last ARR ID equals to "0". Association ID is a sequence number used to keep track of the registration message pairs - MEF discovery/MEF advertisement.

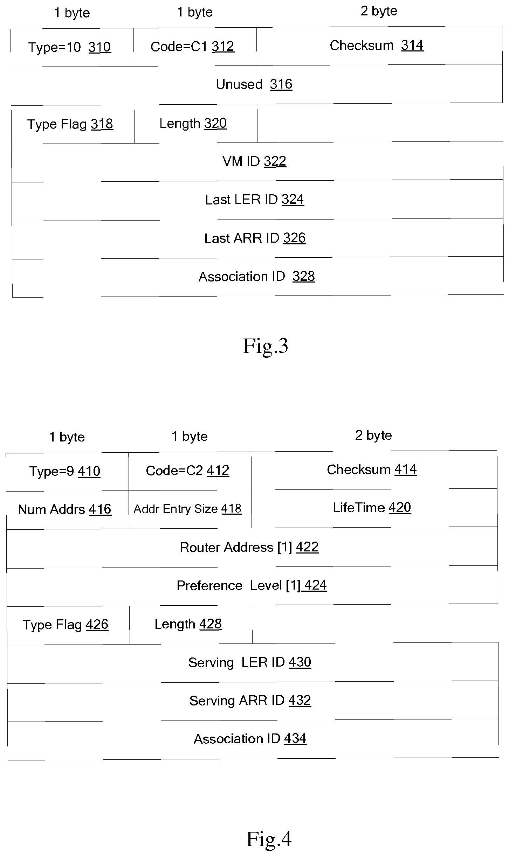

Fig.3 illustratively shows the format of the ICMP router solicitation message according to an embodiment of the present invention.

As shown in Fig.3, the ICMP router solicitation message includes a Type field 310 with 1 byte, a Code field 312 with 1 byte, a Checksum field 314 with 2 bytes, an Unused field 316 with 4 bytes, a Type Flag field 318 with 1 byte, a Length field 320 with 1 byte, a VM ID field 322 with 4 bytes, a Last LER ID field 324 with 4 bytes, a Last ARR ID field 326 with 4 bytes, and an Association ID field 328 with 4 bytes. The Type Flag field 318, the Length field 320, the VM ID field 322, the Last LER ID field 324, the Last ARR ID field 326 and the Association ID field 328 are extensions to the MEF Discovery message. The Length field 320 indicates the lengths (the number of bytes) of the VM ID field 322, the Last LER ID field 324, the Last ARR ID field 326 and the Association ID field 328.

As described above, the LER 11 updates its own virtual machine binding database to reflect the binding of the first virtual machine to the first LER.

The following Table 2 shows the virtual machine binding database of the LER 11.

**Table 2**

| VMID | LER ID |
|---|---|
| 210.101.34.25 | 211.140.111.1 |
| 210.3.2.4 | 211.140.111.1 |

As shown in Table 2, the first LER 11 has registered the first virtual machine VM 41, 210.101.34.25, in its virtual machine binding database.

After registering the first VM 41 in its virtual machine binding database, the LER 11 replies the MEF advertisement message to the first VM 41.

The MEF advertisement message may be sent through the ICMP router advertisement message.

More specifically, the ICMP router advertisement message may be extended to send the MEF advertisement message.

For the ICMP router advertisement message, the ICMP Type field should be set to "9". The ICMP router advertisement message is identified as being used to send the MEF advertisement message by setting the ICMP Code field of the ICMP router advertisement message with an unused value C2 or other value.

The MEF advertisement message may carry the following information, including but not limited to:
1) Type Flag;
2) Serving LER ID;
3) Serving ARR ID;
4) Association ID.

The Type Flag "1" indicates that the message is the MEF advertisement message. The Serving LER ID indicates the IP address of the LER with which the virtual machine is currently registered, i.e. the IP address of the LER 11 in this embodiment. The Serving ARR ID indicates the IP address of the ARR of the area where the LER with which the virtual machine is currently registered is located, i.e. the IP address of ARR 1 in this embodiment. The Association ID is a sequence number used to keep track of the Registration message pairs

### - MEF discovery/MEF advertisement.

Fig.4 illustratively shows the format of the ICMP router advertisement message according to an embodiment of the present invention.

As shown in Fig.4, the ICMP router advertisement message includes a Type field 410 with 1 byte, a Code field 412 with 1 byte, a Checksum field 414 with 2 bytes, a Number of Address field 416 with 1 byte, an Address Entry Size field 418 with 1 byte, a Life Time field 420 with 2 bytes, a Router Address [1] field 422 with 4 bytes, a Preference Level [1] field 424 with 4 bytes, a Type Flag field 426 with 1 byte, a Length field 428 with 1 byte, a Serving LER ID field 430 with 4 bytes, a Serving ARR ID field 432 with 4 bytes, and an Association ID field 434 with 4 bytes. The Type Flag field 426, the Length field 428, the Serving LER ID field 430, the Serving ARR ID field 432 and the Association ID field 434 are extensions to the MEF advertisement message. The Length field 428 indicates the lengths (number of bytes) of the Serving LER ID field 430, the Serving ARR ID field 432 and the Association ID field 434.

Upon completion of the registration, the first LER 11 can forward the data packets received from the first virtual machine 41 to the LER to which the corresponding client is connected, such as the second LER 31 connected with the client 53.

According to an embodiment of the present invention, after completion of the registration, the process shown in Fig.2 may further comprise the following step: the first LER 11 sends a virtual machine binding update message to the area route reflector ARR1 of the area where the first LER 11 is located, such that the ARR 1 can update its own virtual machine binding database to reflect the binding of the first virtual machine 41 to the first LER 11.

The virtual machine binding update message may be sent through a BGP (Boundary Gateway Protocol) update message.

More specifically, the BGP update message may be extended to send the virtual machine binding update message.

For example, the virtual machine binding update message is sent using MP_REACH_NLRI by defining a new <AFI(=A1), SAFI(=S1)> pair. The AFI is the Address Family Identifier, and the SAFI is the Subsequent Address Family Identifier.

That is to say, MP_REACH_NLRI is extended to send the virtual machine binding update message.

Such extended MP_REACH_NLRI attribute is specifically represented as MP_REACH_VMB.

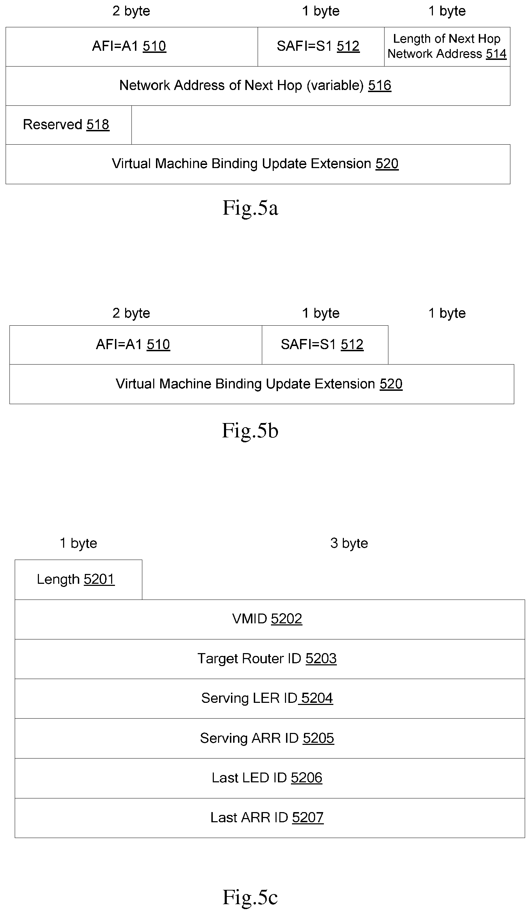

Fig.5a illustratively shows the basic encoding format of the MP_REACH_VMB.

As shown in Fig.5a, MP_REACH_VMB attribute includes an AFI field 510 with 2 bytes (the value of which is A1), a SAFI field 512 with 1 byte (the value of which is S1), a Length of Next Hop Network Address field 514 with 1 byte, a Network Address of Next Hop (variable) field 516 with 4 bytes, a Reserved field 518 with 1 byte, and a VM Binding Update Extension field 520 with several bytes. The VM Binding Update Extension field 520 is the extension to the virtual machine binding update message.

Fig.5c illustratively shows the virtual machine binding update extension field 520.

As shown in Fig.5c, the virtual machine binding update extension field 520 includes: a Length field 5201 with 1 byte, which indicates the length of the virtual machine binding update extension field 520; a VMID field 5202 with 4 bytes, which indicates the IP address of the registered virtual machine; a Target Router ID field 5203 with 4 bytes, which indicates the IP address of the LER or ARR receiving the virtual machine binding update message; a Serving LER ID field 5204, which indicates the IP address of the LER with which the virtual machine is registered; a Serving ARR ID field 5205, which indicates the IP address of the ARR of the area where the serving LER with which the virtual machine is registered is located; a Last LER ID field 5206, which indicates the IP address of the LER with which the virtual machine is lastly registered prior to registering with the current serving LER, and if the virtual machine initially initiates the MEF discovery and registration, the Last LER ID = 0; a Last ARR ID field 5207, which indicates the IP address of the ARR of the area where the LER with which the virtual machine is lastly registered prior to registering with the current serving LER is located, and if the virtual machine initially initiates the MEF discovery and registration, the Last ARR ID=0.

For example, the LER 11 can send to the ARR 1 the virtual machine binding update message including: <VMID = 210.101.34.25, Target Server ID = 211.136.10.1, Serving LER ID = 211.140.111.1, Serving ARR ID = 211.136.10.1, Last LER ID = 0, Last ARR ID = 0>.

After receiving the virtual machine binding update message, the ARR 1 updates its own virtual machine binding database to reflect the binding of the first virtual machine 41 to the first LER 11.

Table 3 shows the recording format in the virtual machine binding database for the ARR 1.

**Table 3**

| VMID | Serving LER ID | Serving ARR ID | Querying LER ID | Querying ARR ID |
|---|---|---|---|---|
| 210.101.34.25 | 211.140.111.1 | 211.136.10.1 | | |
| | | | | |
| | | | | |
| 210.101.27.88 | 211.140.222.1 | 211.136.10.1 | 201.171.101.32 | 201.168.153.1 |
| | | | 201.235.202.11 | 201.232.131.1 |

In Table 3, the first three columns represent the ID of the VM, the ID of the serving LER with which the VMID is registered and the ID of the serving ARR of the area where the serving ARR is located, respectively. The latter two columns respectively represent query logs of the previous binding record of the virtual machine to the LER, that is, the ID of the LER which queries the binding record of the VM to the LER, and the ID of the ARR of the area where the LER is located.

The virtual machine binding database of the ARR differs from that of the LER in that it further comprises a query log entry. In addition, the virtual machine binding database of the ARR only records the VM bindings to the LERs within its area, but not records the VM bindings to the LERs outside its area.

Here, since the VM 41 is just registered with the LER 11 and no other LER and ARR queries this binding record, the query log for this binding record is null.

If the MEF discovery and registration is initiated when the VM is being migrated, after completion of the registration, the process shown in Fig.2 may further comprise the following step:
the first LER sends the virtual machine binding update message to a third LER (e.g., the LER 22) with which the first virtual machine is lastly registered prior to registering with the first LER, such that the third LER can update its own virtual machine binding database to reflect the binding of the first virtual machine to the first LER.

The first LER forwards to the first virtual machine the data packets received from the third LER with which the first virtual machine is lastly registered prior to registering with the first LER, or the first LER forwards to the first virtual machine the data packets received from the second LER connected with the client.

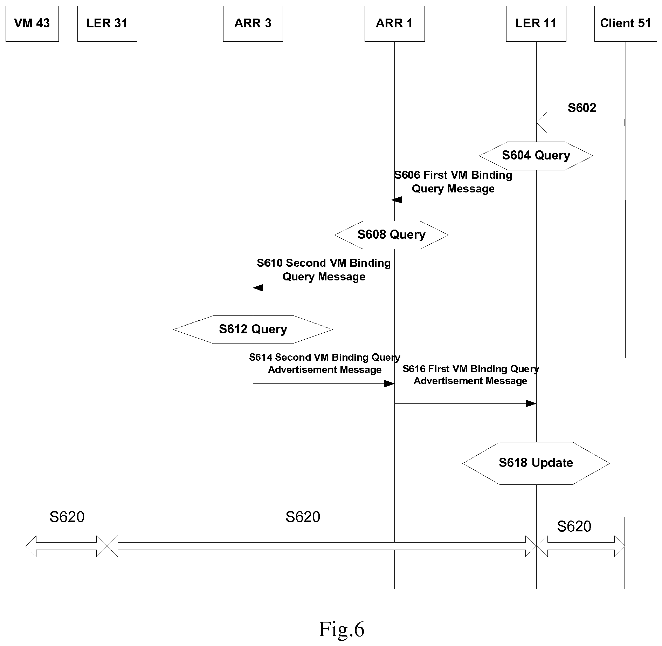

Fig.6 shows the related process when the client initiates communication with the virtual machine.

Assume Fig.6 shows the related process when the client 51 connected to the first LER 11 initiates the communication with the second VM 43 registered with the LER 31.

Of course, those skilled in the art should appreciate that the process shown in Fig.6 can apply to the case in which any client initiates the communication with any virtual machine.

When the client 51 initiates the communication with the second VM 43 registered with the LER 31, the data packet is sent (step S602) to the first LER 11 to which the client 51 is connected.

The first LER 11 learns the destination address (i.e., the ID of the VM 43) from the data packet, and queries (step S604) its own virtual machine binding database based on this VMID so as to find the binding record of the second VM 43.

If the binding record of the second VM 43 is found in its own virtual machine binding database, the first LER 11 determines the forwarding equivalence class of the data packet destined to the second VM 43 based on the IP address of the LER with which the second VM 43 is registered, and the process ends.

If the binding record of the second VM 43 is not found in its own virtual machine binding database, the first LER 11 sends (step S606) the first virtual machine binding query message to the ARR 1 of the area where the first LER 11 is located to obtain the binding of the second VM 43.

After receiving the first virtual machine binding query message, the ARR 1 queries (step S608) its own virtual machine binding database to find the binding record of the second VM 43.

If the binding record of the second VM 43 is found in its own virtual machine binding database, the ARR 1 sends the first virtual machine binding query advertisement message to the first LER 11 to notify the first LER 11 of the binding of the second virtual machine VM 43 to the corresponding LER, and records the query log in its virtual machine binding database.

After receiving the first virtual machine binding query advertisement message, the first LER 11 updates its own virtual machine binding database, and determines the forwarding equivalence class of the data packet destined to the second VM 43 based on the IP address of the LER with which the second VM 43 is registered, and the process ends.

In the process shown in Fig.6, assume that the ARR 1 does not find the binding record of the second VM 43 in its own virtual machine binding database, then the ARR 1 sends (step S610) the second virtual machine binding query message to any other ARR to obtain the binding of the second VM 43.

After receiving the second virtual machine binding query message, the ARR (e.g., ARR 3) queries (step S612) its own virtual machine binding database to find the binding record of the second VM 43.

Since the ARR 3 finds the binding record of the second VM 43 in its own virtual machine binding database, the ARR 3 sends (step S614) the second virtual machine binding query advertisement message to the ARR1 to notify the ARR 1 of the binding of the second virtual machine VM 43 to the corresponding LER (i.e., the LER 31), and records the query log in its virtual machine binding database.

After receiving the second virtual machine binding query advertisement message, the ARR 1 sends (step S616) the first virtual machine binding query advertisement message to the first LER 11 to notify the first LER 11 of the binding of the second virtual machine VM 43 to the corresponding LER.

After receiving the first virtual machine binding query advertisement message, the first LER 11 updates (step S618) its own virtual machine binding database, and determines the forwarding equivalence class of the data packet destined to the second VM 43 based on the IP address of the LER with which the second VM 43 is registered. Thereafter, as shown by step S620, the data packets can be transmitted between the client 51 and the VM 43.

The above described virtual machine binding query messages and virtual machine binding query advertisement messages may be sent through the BGP update message.

Furthermore, considering extensibility, the virtual machine binding query message and the virtual machine binding query advertisement message are only transmitted between the LER and the ARR or between the ARRs, and are not transmitted between the LERs.

More specifically, the BGP update message can be extended to send the virtual machine binding query message and the virtual machine binding query advertisement message.

The virtual machine binding query message can be sent using MP_REACH_NLRI by defining a new <AFI(=A1), SAFI(=S2)> pair.

That is to say, the MP_REACH_NLRI is extended to send the virtual machine binding query message.

Such extended MP_REACH_NLRI attribute is specifically represented as MP_VMB_QUERY.

The virtual machine binding query advertisement message can be sent using MP_REACH_NLRI by defining a new <AFI(=A1), SAFI(=S3)> pair.

That is to say, the MP_REACH_NLRI is extended to send the virtual machine binding query advertisement message.

Such extended MP_REACH_NLRI attribute is specifically represented as MPVMB NTFC.

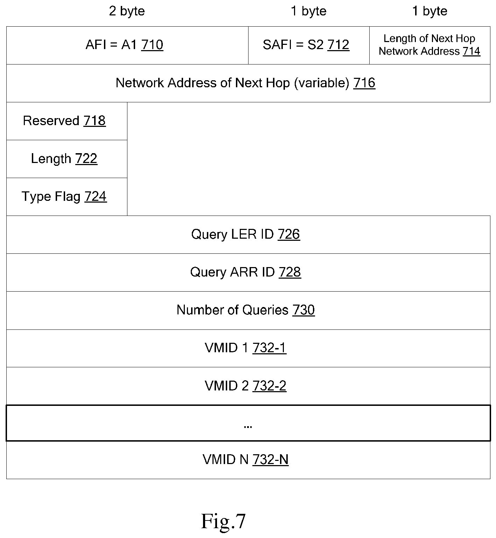

Fig.7 illustratively shows the basic encoding format of the MP_VMB_QUERY.

As shown in Fig.7, the MP_VMB_QUERY attribute includes an AFI field 710 with 2 bytes (the value of which is A1), a SAFI field 712 with 1 byte (the value of which is S2), a Length of Next Hop Network Address field 714 with 1 byte, a Network Address of Next Hop (variable) field 716 with 4 bytes, a Reserved field 718 with 1 byte, a Length field 722 with 1 byte which indicates the lengths of the following fields, a Type Flag field 724 with 1 byte, a Querying LER ID field 726 with 4 bytes which indicates the IP address of the LER that makes a virtual machine binding query, a Querying ARR ID field 728 with 4 bytes which indicates the IP address of the ARR of the area where the LER that makes the virtual machine binding query is located, a Number of Queries field 730 with 4 bytes which indicates the number of the virtual machine binding queries carried in this message, VMID fields 732-1, 732-2, ..., 732-N which indicate the IP addresses of the virtual machines on which the binding query is to be performed.

The Length field 722 and the fields thereafter are extensions to the virtual machine binding query message.

The Type Flag field 724 may be set with two values, for example, 1 and 2.

When the value of the Type Flag field is "1", it indicates that the virtual machine binding query message is the virtual machine binding query message from the LER to the ARR of the area where the LER is located, for example, the first virtual machine binding query message described above.

When the value of the Type Flag field is "2", it indicates that the virtual machine binding query message is the virtual machine binding query message from the ARR of the area where the LER is located to any other ARR, for example, the second virtual machine binding query message described above.

For example, the LER 11 can send to the ARR 1 the first virtual machine binding query message including: <Type Flag = 1, Querying LER ID = 211.140.111.1, Querying ARR ID = , Number of Queries = 1, VMID = 210.101.34.35>.

For the first virtual machine binding query message, since it is sent from the LER 11 to the ARR 1 of the area where the LER 11 is located, the Querying ARR ID field may be omitted.

The ARR 1 may send to any other ARR the second virtual machine binding query message including: <Type Flag = 2, Querying LER ID = 211.140.111.1, Querying ARR ID =211.136.10.1, Number of Queries = 1, VMID = 210.101.34.35>.

For the second virtual machine binding query message, the Querying ARR ID field cannot be omitted.

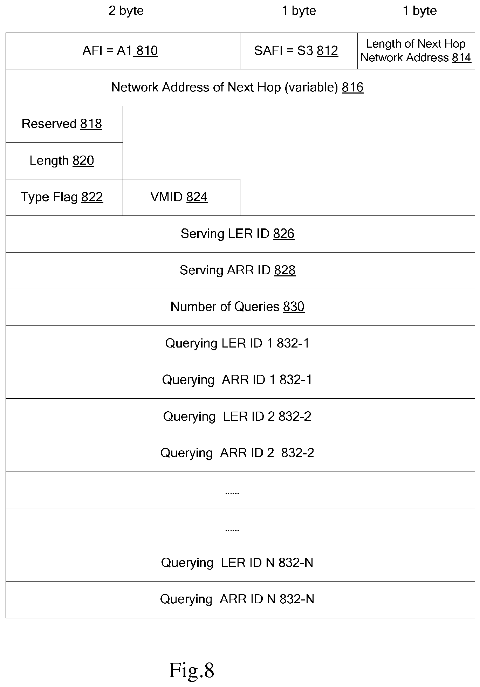

Fig.8 illustratively shows the basic encoding format of the MP_VMB_NTFC.

As shown in Fig.8, the MP_VMB_NTFC attribute includes an AFI field 810 with 2 bytes (the value of which is A1), a SAFI field 812 with 1 byte (the value of which is S3), a Length of Next Hop Network Address field 814 with 1 byte, a Network Address of Next Hop (variable) field 816 with 4 bytes, a Reserved field 818 with 1 byte, a Length field 820 with 1 byte which indicates the lengths of the following fields, a Type Flag field 822 with 1 byte, a VM ID field 824 with 1 byte which indicates the IP address of the virtual machine on which the binding query is performed, a Serving LER ID field 826 with 4 bytes which indicates the IP address of the LER with which the queried virtual machine is registered, a Serving ARR ID field 828 with 4 bytes which indicates the IP address of the ARR of the area where the LER with which the queried virtual machine is registered is located, a Number of Queries field 830 with 4 bytes which indicates the number of LER-ARR pairs which queries the binding record of the virtual machine, Querying LER-Querying ARR pair fields 832-1, 832-2, ..., 832-N with 4 bytes respectively, which indicate the IP addresses of the LER-ARR pairs that conduct the binding query on the virtual machine in the above VM ID field 824.

The Length field 822 and the fields thereafter are extensions.

The Type Flag field 822 may be set with four values, for example, 1, 2, 3 and 4.

When the value of the Type Flag field is 1, it indicates that the virtual machine binding query advertisement message is sent from the ARR of the area where the LER that initiates the virtual machine binding query is located to the LER, for example, the above-described first virtual machine binding query advertisement message. In this case, the pair of Querying LER and Querying ARR fields may be omitted.

When the value of the Type Flag field is 2, it indicates that the virtual machine binding query advertisement message is sent from other ARR to the ARR of the area where the LER that initiates the virtual machine binding query is located, for example, the above-described second virtual machine binding query advertisement message.

When the value of the Type Flag field is 3, it indicates that the MP_VMB_NTFC attribute sends the first virtual machine binding database advertisement message, and the first virtual machine binding database advertisement message is sent from the ARR to the LER. In this case, the pair of Querying LER and Querying ARR pair fields may be omitted. The Number of Queries may be set to 0.

When the value of the Type Flag field is 4, it indicates that the MP_VMB_NTFC attribute sends the second virtual machine binding database advertisement message, and the second virtual machine binding database advertisement message is sent from one ARR to another ARR.

For example, the ARR 3 can send to the ARR 1 the second virtual machine binding query advertisement message including: <Type Flag = 2, VMID = 210.101.34.35, Serving LER ID = 213.140.111.1, Serving ARR ID = 213.136.10.1, Number of Queries = 1, Querying LER ID 1 =211.140.111.1, Querying ARR ID 1 = 211.136.10.1>.

The ARR 1 may send to the LER 11 the first virtual machine binding query advertisement message including: <Type Flag = 1, VMID = 210.101.34.35, Serving LER ID = 213.140.111.1, Serving ARR ID = 213.136.10.1, Number of Queries = 0>.

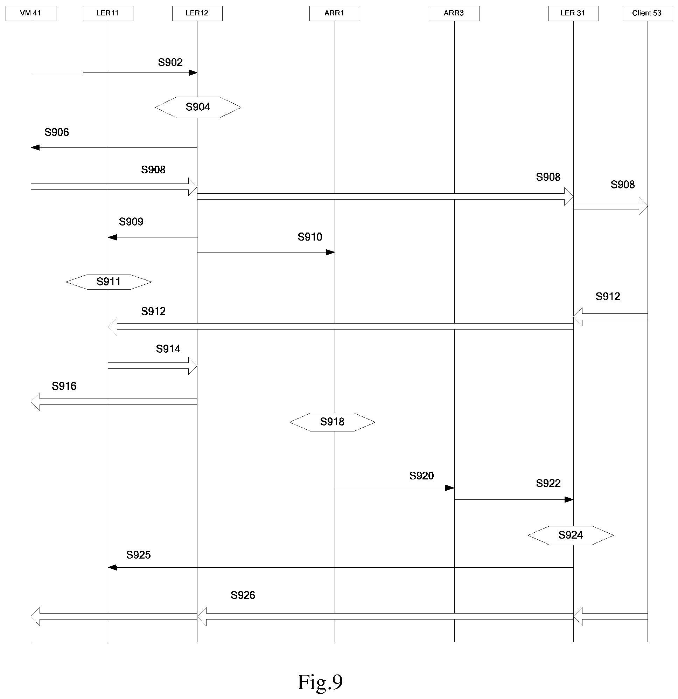

Fig.9 illustratively shows the related process when the virtual machine is being migrated according to an embodiment of the present invention.

In the embodiment shown in Fig.9, assume that the VM 41 currently registered with LER 11 is to be migrated to the LER 12. That is, the VM 41 is migrated between the LERs within the area served by the same ARR (referred to as intra-domain migration hereinafter). In addition, assume that the VM 41 currently communicates the data packets with the client 53 connected to the LER 31, and therefore, the query log that the querying LER is LER 31 and the querying ARR is ARR 3 is included in the virtual machine binding database of the ARR 1.

Firstly, at step S902, the VM 41 sends to the fourth LER (i.e. the LER 12) the MEF discovery message including: <Type = 0, VMID = 210.101.34.25, Last LER ID = 211.140.111.1, Last ARR ID = 211.136.10.1, Association ID = 14>.

After receiving the MEF discovery message, the LER 12 knows that the VM 41 performs the intra-domain migration, because the Last ARR ID is same as the ID of the ARR of the area where the LER 12 is located. At step S904, the LER 12 updates its own virtual machine binding database to reflect the binding of the VM 41 to the LER 12.

Next, at step S906, the LER 12 sends to the VM 41 the MEF advertisement message including: <Type = 1, Serving LER ID = 211.140.222.1, Serving ARR ID = 211.136.10.1, Association ID = 14>.

Upon completion of the MEF discovery and registration process, as shown in step S908, the data packet sent from the VM 41 to the client 53 will be directly transferred to the LER 12, which forwards the data packet to the LER 31 to which the client 53 is connected, and the LER 31 forwards the data packet to the client 53.

Then, at steps S909 and S910, the LER 12 sends the virtual machine binding update message to the LER 11 with which the VM 41 is lastly registered prior to registering with the LER 12 and to the ARR 1 of the area where the LER 12 is located, respectively.

The virtual machine binding update message sent to the LER 11includes: <VMID = 210.101.34.25, Target Router ID = 211.140.111.1, Serving LER ID = 211.140.222.1, Serving ARR ID = 211.136.10.1, Last LER ID = 211.140.111.1, Last ARR ID = 211.136.10.1>.

The virtual machine binding update message sent to the ARR 1 includes: <VMID = 210.101.34.25, Target Router ID = 211.136.10.1, Serving LER ID = 211.140.222.1, Serving ARR ID = 211.136.10.1, Last LER ID = 211.140.111.1, Last ARR ID = 211.136.10.1>.

After receiving the virtual machine binding update message sent by the LER 12, the LER 11 knows that the VM 41 has been migrated from the LER 11 to the LER 12. Therefore, at step S911, the LER 11 updates its own virtual machine binding database to reflect the binding of the VM 41 to the LER 12.

Thereafter, as shown in step S914, the LER 11 forwards to the LER 12 the data packet received from the LER 31 to which the client 53 is connected and destined to the VM 41 in step 912, and the data packet is forwarded to the VM 41 by the LER 12 at step S916.

After receiving the virtual machine binding update message from the LER 12, the ARR 1 knows that the VM 41 is still within its serving area, and updates its own virtual machine binding database to reflect that the VM 41 has been migrated from the LER 11 to the LER 12, as shown in step S918.

Next, the ARR 1 sends the second virtual machine binding database advertisement message to all of the other ARRs that have queried the binding of the VM 41.

As described above, the ARR 3 has queried the binding of the VM 41. Therefore, at step S920, the ARR 1 sends to the ARR 3 the second virtual machine binding database advertisement message including: <Type Flag = 4, VMID = 210.101.34.25, Serving LER ID = 211.140.222.1, Serving ARR ID = 211.136.10.1, Number of Queries = 1, Querying LER ID 1 = 213.140.111.1, Querying ARR ID 1 = 213.136.10.1>.

After receiving the second virtual machine binding database advertisement message, at step S922, the ARR 3 sends the first virtual machine binding database advertisement message to the LER 31. The first virtual machine binding database advertisement message includes: < Type Flag = 3, VMID = 210.101.34.25, Serving LER ID = 211.140.222.1, Serving ARR ID = 211.136.10.1, Number of Queries = 0>.

After receiving the first virtual machine binding database advertisement message, the LER 31 knows that the VM 41 has been migrated from the LER 11 to the LER 12. Therefore, at step S924, the LER 31 updates its own virtual machine binding database to reflect the migration of the VM 41. Furthermore, the forwarding equivalence class of the data packet sent to the VM 41 is determined based on the IP address of the LER 12 with which the VM 41 is registered, at step S926, the data packet destined to the VM 41 are directly sent to the LER 12 instead of the LER 11 through the label switching path (LSP). That is to say, after the step S926, there is no necessary to forward the data packet from the LER 31 to the LER 12 via the LER 11.

In addition, step S925 is further comprised after step S924. At step S925, the LER 31 sends additional virtual machine binding update message to the LER 11, such that the LER 11 removes the binding record of the VM 41 from its virtual machine binding database.

The additional virtual machine binding update message can be sent through the BGP (Boundary Gateway Protocol) update message.

More specifically, the BGP update message can be extended to send the virtual machine binding update message.

For example, the additional virtual machine binding update message can be sent using MP_UNREACH_NLRI by defining a new <AFI(=A1), SAFI(=S1)> pair. The AFI is the address family identifier, and the SAFI is the subsequent address family identifier.

That is to say, MP_UNREACH_NLRI is extended to send the additional virtual machine binding update message.

Such extended MP_UNREACH_NLRI attribute is specifically represented as MP_UNREACH_VMB.

Fig.5b illustratively shows the basic encoding format of MP_UNREACH_VMB.

As shown in Fig.5b, MP_UNREACHVMB attribute includes an AFI field 510 with 2 bytes (the value of which is A1), a SAFI field 512 with 1 byte (the value of which is S1), and a VM Binding Update Extension field 520 with several bytes. The VM Binding Update Extension field 520 is an extension to the additional virtual machine binding update message.

The VM Binding Update Extension field 520 has been described above in conjunction with Fig.5c and it will not be described here again.

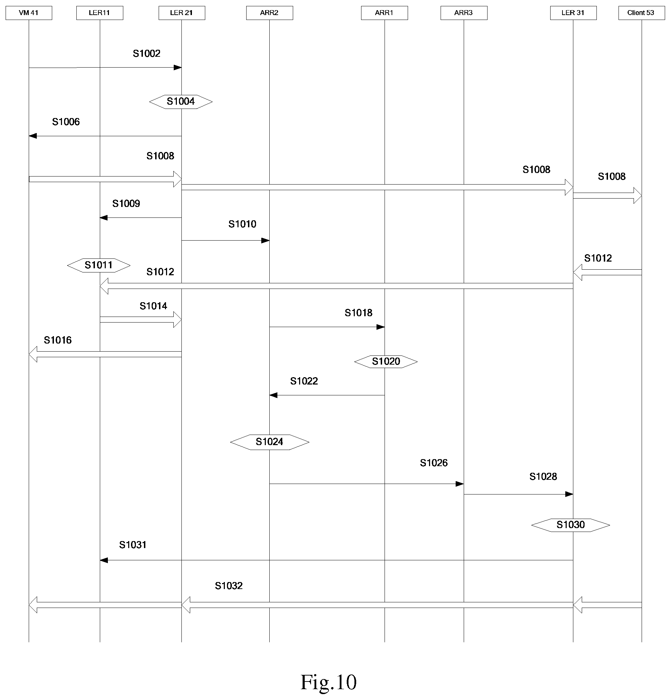

Fig. 10 illustratively shows the related process when the virtual machine is being migrated according to another embodiment of the present invention.

In the embodiment shown in Fig.10, assume that the VM 41 currently registered with the LER 11 is to be migrated to the LER 21. That is, the VM 41 is migrated between the LERs in the areas served by different ARRs (referred to as inter-domain migration hereinafter). In addition, assume that the VM 41 currently communicate the data packets with the client 53 connected to the LER 31, and therefore, the query log that the querying LER is LER 31 and the querying ARR is ARR 3 is included in the virtual machine binding database of the ARR 1.

First, at step S1002, the VM 41 sends to the fourth LER (i.e. the LER 21) the MEF discovery message including: <Type = 0, VMID = 210.101.34.25 , Last LER ID = 211.140.111.1, Last ARR ID = 211.136.10.1, Association ID = 15>.

After receiving the MEF discovery message, the LER 21 knows that the VM 41 performs the inter-domain migration, because the Last ARR ID is different from the ID of the ARR of the area where the LER 21 is located. At step S1004, the LER 21 updates its own virtual machine binding database to reflect the binding of the VM 41 to the LER 21.

Next, at step S1006, the LER 21 sends to the VM 41 the MEF advertisement message including: <Type = 1, Serving LER ID = 212.140.111.1, Serving ARR ID = 212.136.10.1, Association ID = 15>.

Upon completion of the MEF discovery and registration process, as shown in step S1008, the data packet sent from the VM 41 to the client 53 will be directly transferred to the LER 21, which forwards the data packet to the LER 31 to which the client 53 is connected, and the LER 31 forwards the data packet to the client 53.

Then, at steps S1009 and S1010, the LER 21 sends the virtual machine binding update message to the LER 11 with which the VM 41 is lastly registered before registering with the LER 21, and to the ARR 2 of the area where the LER 21 is located, respectively.

The virtual machine binding update message sent to the LER 11 includes: <VMID = 210.101.34.25, Target Router ID = 211.140.111.1, Serving LER ID = 212.140.111.1, Serving ARR ID = 212.136.10.1, Last LER ID = 211.140.111.1, Last ARR ID = 211.136.10.1>.

The virtual machine binding update message sent to the ARR 2 includes: <VMID = 210.101.34.25, Target Router ID = 212.136.10.1, Serving LER ID = 212.140.111.1, Serving ARR ID = 212.136.10.1, Last LER ID = 211.140.111.1, Last ARR ID = 211.136.10.1>.

After receiving the virtual machine binding update message sent by the LER 21, the LER 11 knows that the VM 41 has been migrated from the LER 11 to the LER 21. Therefore, at step S1011, the LER 11 updates its own virtual machine binding database to reflect the binding of the VM 41 to the LER 21.

Thereafter, as shown in step S1014, the LER 11 forwards the data packet received from the LER 31 connected to the client 53 and destined to the VM 41 in step 1012 to the LER 21, which forwards the data packet to the VM 41 at step S1016.

After receiving the virtual machine binding update message from the LER 21, the ARR 2 knows that the VM 41 is migrated into its serving area, and as shown in step S1018, the ARR 2 sends to the ARR 1 the virtual machine binding update message which includes: <VMID = 210.101.34.25, Target Router ID = 211.136.10.1, Serving LER ID = 212.140.111.1, Serving ARR ID = 212.136.10.1, Last LER ID = 211.140.111.1, Last ARR ID = 211.136.10.1>.

Upon receiving this message, the ARR 1 knows that VM 41 has been migrated outside of its serving area, and as shown in step S1020, the ARR 1 updates its own virtual machine binding database to modify the serving LER of the VM 41 from the LER 11 to the LER 21 and modify the serving ARR of the VM 41 from the ARR 1 to the ARR 2.

Then, at step S1022, the ARR 1 sends the binding record about the VM 41 including the query log of the VM 41 to the ARR 2 through the second virtual machine binding database advertisement message. For example, the ARR 1 sends to the ARR 2 the second virtual machine binding database advertisement message including: <Type Flag = 4, VMID = 210.101.34.25, Serving LER ID = 212.140.111.1, Serving ARR ID = 212.136.10.1, Number of Queries = 3, Querying LER ID 1 = 213.140.111.1, Querying ARR ID 1 = 213.136.10.1, Querying LER ID 2 = 211.142.109.1, Querying ARR ID 2 = 211.130.10.1, Querying LER ID 3 = 213.145.111.1, Querying ARR ID 3 = 213.130.10.1>.

After receiving the second virtual machine binding database advertisement message from the ARR 1, as shown in step S1024, the ARR 2 updates its own virtual machine binding database to add a triple <VMID = 210.101.34.25, Serving LER ID = 212.140.111.1, Serving ARR ID = 212.136.10.1> and three query logs <Querying LER ID 1 = 213.140.111.1, Querying ARR ID 1 = 213.136.10.1>, < Querying LER ID 2 = 211.142.109.1, Querying ARR ID 2 = 211.130.10.1>, < Querying LER ID 3 = 213.145.111.1, Querying ARR ID 3 = 213.130.10.1> into its virtual machine binding database.

Then, at step S1026, the ARR 2 sends the second virtual machine binding database advertisement message to each of the ARRs that query the binding of the VM 41 (e.g., the ARR 3). The second virtual machine binding database advertisement message, for example, includes <Type Flag = 4, VMID = 210.101.34.25, Serving LER ID = 212.140.111.1, Serving ARR ID = 212.136.10.1, Number of Queries = 1, Querying LER ID 1 = 213.140.111.1, Querying ARR ID 1 = 213.136.10.1>.

After receiving the second virtual machine binding database advertisement message, at step S1028, the ARR 3 sends to the LER 31 the first virtual machine binding database advertisement message which includes: <Type Flag = 3, VMID = 210.101.34.25, Serving LER ID = 212.140.111.1, Serving ARR ID = 212.136.10.1, Number of Queries = 0>.

After receiving the first virtual machine binding database advertisement message, the LER 31 knows that the VM 41 has been migrated from the LER 11 to the LER 21. Therefore, at step S1030, the LER 31 updates its own virtual machine binding database to reflect the migration of the VM 41. The forwarding equivalence class of the data packet sent to the VM 41 is determined based on the IP address of the LER 21 with which the VM 41 is currently registered. At step S1032, the data packet destined to the VM 41 is directly sent to the LER 21 instead of the LER 11 through the label switching path (LSP). That is to say, after step S1032, there is no necessary to forward the data packet from the LER 31 to the LER 21 via the LER 11.

In addition, after step S1030, step S1031 is further comprised. At step S1031, the LER 31 sends to the LER 11 additional virtual machine binding update message as described above in conjunction with Fig.9, such that the LER 11 removes the binding record about the VM 41 from its virtual machine binding database.

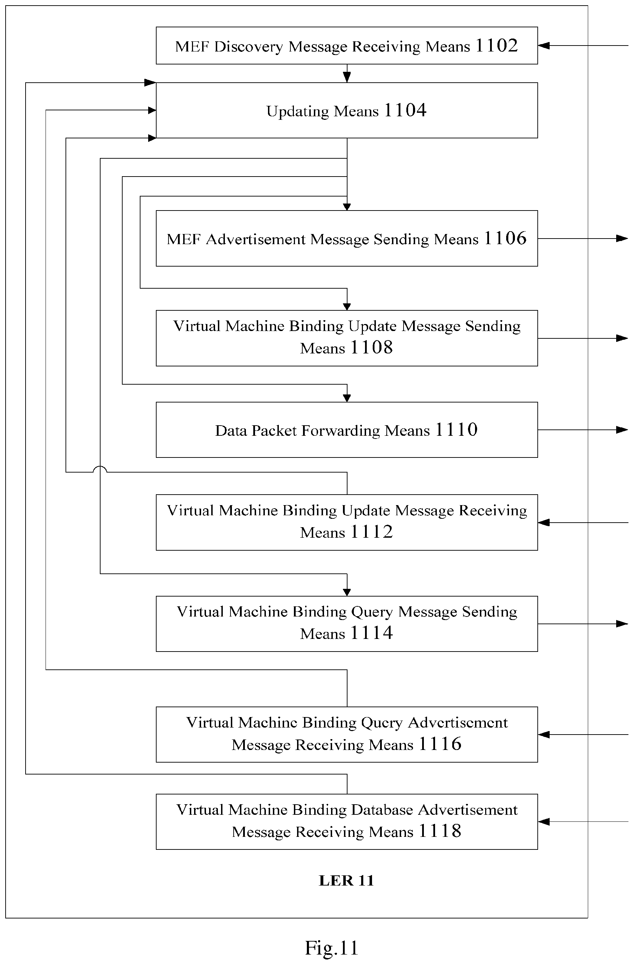

Fig.11 shows a block diagram of the label edge router (LER) according to an embodiment of the present invention.

The LER as shown in Fig.11 may be any one of the LERs shown in Fig.1. Assume that the LER shown in Fig.11 is the first LER, i.e. the LER 11.

As shown in Fig.11, the LER 11 comprises: migration enablement function (MEF) discovery message receiving means 1102 configured to receive the migration enablement function (MEF) discovery message from the first virtual machine that wishes to register with the first LER; updating means 1104 configured to update its own virtual machine binding database to reflect the binding of the first virtual machine to the first LER; and MEF advertisement message sending means 1106 configured to send the MEF advertisement message to the first virtual machine to indicate that the first LER completes the registration of the first virtual machine.

According to an embodiment of the present invention, when finding that the VMID contained in the MEF discovery message falls within the IP address range for supporting the migration of the virtual machines, the updating means updates its own virtual machine binding database to reflect the binding of the first virtual machine to the first LER.

According to an embodiment of the present invention, the LER 11 further comprises: virtual machine binding update message sending means 1108 configured to send the virtual machine binding update message to the first area route reflector (ARR) of the area where the first LER is located, such that the first ARR can update its own virtual machine binding database to reflect the binding of the first virtual machine to the first LER, and/or to send the virtual machine binding update message to the third LER with which the first virtual machine is recently registered prior to registering with the first LER, such that the third LER can update its own virtual machine binding database to reflect the binding of the first virtual machine to the first LER.

According to an embodiment of the present invention, the LER 11 further comprises: data packet forwarding means 1110 configured to forward the data packets received from the first virtual machine to the second LER to which the client is connected, and/or to forward, to the first virtual machine, the data packets received from the third LER with which the first virtual machine is lastly registered prior to registering with the first LER, and/or forward, to the fourth LER, the data packets received from the second LER to which the client is connected and destined to the first virtual machine. The data packet forwarding means forwards the data packets based on forwarding equivalence classes of the data packets, wherein the forwarding equivalence class of the data packet destined to the first virtual machine is determined, by an ingress LER for the data packets, based on the IP address of the LER with which the first virtual machine is registered, instead of the IP address of the first virtual machine itself.

According to an embodiment of the present invention, the LER 11 further comprises: virtual machine binding update message receiving means 1112 configured to receive the virtual machine binding update message from the fourth LER with which the first virtual machine is lastly registered after being registered with the first LER; and wherein the updating means is further configured to update its own virtual machine binding database to reflect the binding of the first virtual machine to the fourth LER.

According to an embodiment of the present invention, the LER 11 further comprises: virtual machine binding query message sending means 1114 configured to send the first virtual machine binding query message to the first ARR of the area where the first LER is located to obtain the binding of the second virtual machine, wherein the client connected to the first LER wishes to send the data packets to the second virtual machine; and virtual machine binding query advertisement message receiving means 1116 configured to receive the first virtual machine binding query advertisement message from the first ARR of the area where the first LER is located; and wherein the updating means 1104 is further configured to update its own virtual machine binding database to reflect the binding of the second virtual machine to the corresponding LER.

According to an embodiment of the present invention, the LER 11 further comprises: virtual machine binding database advertisement message receiving means 1118 configured to receive the first virtual machine binding database advertisement message from the first ARR of the area where the first LER is located; and wherein the updating means 1104 is further configured to update its own virtual machine binding database to reflect the migration of the second virtual machine between the LERs.

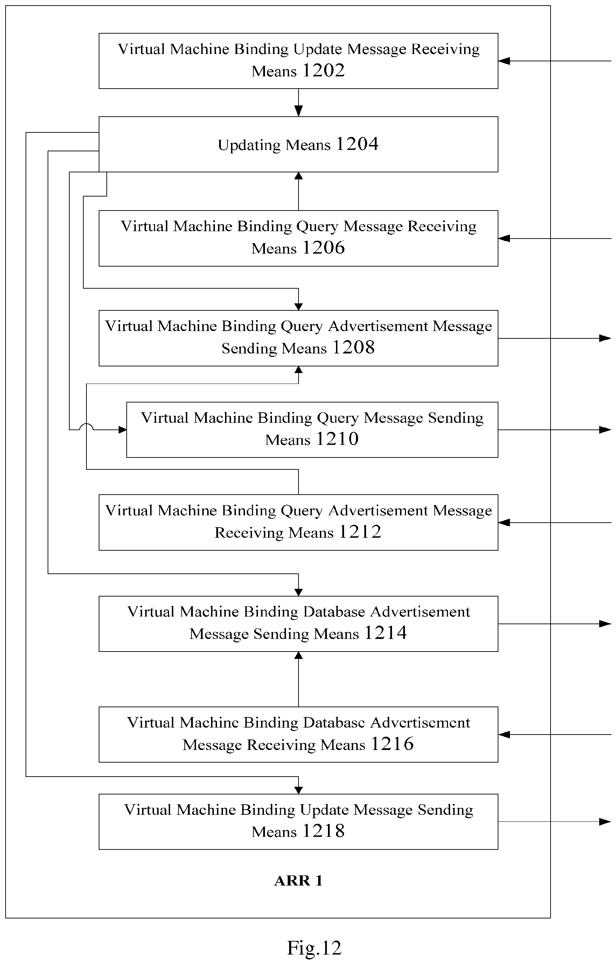

Fig.12 shows a block diagram of the area route reflector (ARR) according to an embodiment of the present invention.

The ARR as shown in Fig.12 can be any one of the ARRs shown in Fig.1. Assume that the ARR shown in Fig.12 is the first ARR, i.e. ARR 1.

As shown in Fig.12, the ARR 1 comprises: virtual machine binding update message receiving means 1202 configured to receive the virtual machine binding update message from the first label edge router (LER) located in the area of the first ARR, the virtual machine binding update message indicating that the first virtual machine is bound to the first LER; and updating means 1204 configured to update its own virtual machine binding database based on the received virtual machine binding update message to reflect the binding of the first virtual machine to the first LER.

According to an embodiment of the present invention, the ARR 1 further comprises: virtual machine binding query message receiving means 1206 configured to receive the first virtual machine binding query message from the first LER, wherein the first virtual machine binding query message is intended to obtain the binding of the second virtual machine; and virtual machine binding query advertisement message sending means 1208 configured to send the first virtual machine binding query advertisement message to the first LER to notify the first LER of the binding of the second virtual machine to the corresponding LER.

According to an embodiment of the present invention, the ARR 1 further comprises: virtual machine binding query message sending means 1210 configured to send the second virtual machine binding query message to any other ARR to obtain the binding of the second virtual machine; and virtual machine binding query advertisement message receiving means 1212 configured to receive the second virtual machine binding query advertisement message from at least one of the any other ARR, the second virtual machine binding query advertisement message reflecting the binding of the second virtual machine to the corresponding LER.

According to an embodiment of the present invention, the virtual machine binding query message receiving means 1206 is configured to receive the second virtual machine binding query message from the second ARR, wherein the second virtual machine binding query message is intended to obtain the binding of the first virtual machine, and the second ARR is the ARR 3; and the virtual machine binding query advertisement message sending means is configured to send the second virtual machine binding query advertisement message to the second ARR to notify the second ARR of the binding of the first virtual machine.

According to an embodiment of the present invention, the ARR 1 further comprises: virtual machine binding database advertisement message sending means 1214 configured to send the first virtual machine binding database advertisement message to the first LER to notify the first LER of the migration of the second virtual machine between the LERs.

According to an embodiment of the present invention, the ARR 1 further comprises: virtual machine binding database advertisement message receiving means 1216 configured to receive the second virtual machine binding database advertisement message from at least one of the any other ARR, the second virtual machine binding database advertisement message indicating the migration of the second virtual machine between the LERs.

According to an embodiment of the present invention, the virtual machine binding database advertisement message sending means 1214 is configured to send the second virtual machine binding database advertisement message to the second ARR to notify the second ARR of the migration of the first virtual machine between the LERs.

According to an embodiment of the present invention, the ARR 1 further comprises: virtual machine binding update message sending means 1218 configured to send the virtual machine binding update message to the third ARR, wherein the virtual machine binding update message indicates that the first virtual machine is migrated from one LER in an area served by the third ARR to the first LER, and the third ARR is the ARR 2; and virtual machine binding database advertisement message receiving means 1216 configured to receive the second virtual machine binding database advertisement message from the third ARR, the second virtual machine binding database advertisement message indicating the query log about the first virtual machine.

According to an embodiment of the present invention, the virtual machine binding update message receiving means 1202 is further configured to receive the virtual machine binding update message from the fourth ARR, and the virtual machine binding update message received from the fourth ARR indicates that the first virtual machine is migrated from the first LER to one LER in the area served by the fourth ARR, the fourth ARR is the ARR 2; the updating means 1204 is further configured to update its own virtual machine binding database to reflect that the first virtual machine is migrated from the first LER to the one LER in the area served by the fourth ARR; and the virtual machine binding database advertisement message sending means 1214 is configured to send the second virtual machine binding database advertisement message to the fourth ARR to notify the fourth ARR of the query log about the first virtual machine.

It should be noted that in order to ease the understanding of the present invention, the above description has omitted some more specific technical details known to those skilled in the art but may be necessary to implement the present invention.

Those skilled in the art should also appreciate that the present invention is not limited to the above described steps, and the present invention also encompasses combination, or order change, etc. of the above described steps. The final scope of the present invention is defined by the appended claims.

Therefore, the above embodiments are chosen and described in order to explain the principles and practical application of the present invention, and to enable those skilled in the art to understand that all such modifications and alterations will fall into protection scope of the invention defined by claims.

Furthermore, those skilled in the art will appreciate that the steps of the various methods described above may be implemented by a programmed computer. Here, some embodiments cover the program storage, which is machine or computer readable and encoded with machine executable or computer executable instruction program, wherein the instructions perform some or all of the steps of the above methods. The program storage may be magnetic storage medium such as magnetic disk or magnetic tape, hard disk driver or optical readable digital data storage medium. The embodiments also cover the computer programmed to perform the steps of the above methods.

## Claims

1. A method for supporting migration of virtual machines across multiprotocol label switching network (100), comprising the steps of:
a first label edge router, LER, (11) receiving a migration enablement function, MEF, discovery message from a first virtual machine (41) that wishes to register with the first LER (11);
the first LER (11) updating its own virtual machine binding database to reflect binding of the first virtual machine (41) to the first LER (11); and
the first LER (11) sending a MEF advertisement message to the first virtual machine (41) to indicate that the first LER (11) completes the registration of the first virtual machine (41),
wherein the first LER (11) updates its own virtual machine binding database to reflect the binding of the first virtual machine (41) to the first LER (11) when the first LER (11) finds that the virtual machine identifier, VMID, contained in the MEF discovery message falls within an IP address range for supporting the migration of virtual machines.

2. The method according to claim 1, further comprising the step of:
the first LER (11) sending a virtual machine binding update message to a first area route reflector, ARR, (1) of an area (101) where the first LER (11) is located, such that the first ARR (1) can update its own virtual machine binding database to reflect the binding of the first virtual machine (41) to the first LER (11).

3. The method according to claim 1, further comprising the step of:
the first LER (11) sending a virtual machine binding update message to a third LER (22) with which the first virtual machine (41) is lastly registered prior to registering with the first LER (11), such that the third LER (22) can update its own virtual machine binding database to reflect the binding of the first virtual machine (41) to the first LER (11).

4. The method according to claim 3, further comprising the step of:
the first LER (11) forwarding data packets received from the first virtual machine (41) to a second LER (31) to which a client (53) is connected; or
the first LER (11) forwarding, to the first virtual machine (41), data packets received from the third LER (22) with which the first virtual machine (41) is lastly registered prior to registering with the first LER (11); or
the first LER (11) forwarding, to the first virtual machine (41), data packets received from a second LER (31) to which a client (53) is connected;
wherein the data packets are respectively forwarded based on forwarding equivalence classes of the data packets, wherein the forwarding equivalence class of the data packet destined to the first virtual machine (41) is determined, by an ingress LER for the data packet, based on an IP address of the LER with which the first virtual machine (41) is registered, instead of an IP address of the first virtual machine (41) itself.

5. The method according to claim 1, further comprising the step of:
the first LER (11) receiving a virtual machine binding update message from a fourth LER (12) with which the first virtual machine (41) is lastly registered after being registered with the first LER (11), and updating its own virtual machine binding database to reflect the binding of the first virtual machine (41) to the fourth LER (12).

6. The method according to claim 1, further comprising the steps of:
the first LER (11) sending a first virtual machine binding query message to a first ARR (1) of an area (101) where the first LER (11) is located to obtain the binding of a second virtual machine (43), wherein a client (51) connected to the first LER (11) wishes to send the data packets to the second virtual machine (43);
the first LER (11) receiving a first virtual machine binding query advertisement message from the first ARR (1) of the area (101) where the first LER (11) is located, and updating its own virtual machine binding database to reflect the binding of the second virtual machine (43) to a corresponding LER (31).

7. The method according to claim 6, further comprising the step of:
the first LER (11) receiving a first virtual machine binding database advertisement message from the first ARR (1) of the area (101) where the first LER (11) is located, and updating its own virtual machine binding database to reflect the migration of the second virtual machine (43) between the first LER (11) and the corresponding LER (31).

8. A first label edge router, LER, (11) of supporting migration of virtual machines across multiprotocol label switching network (100), comprising:
migration enablement function, MEF, discovery message receiving means that receives a migration enablement function, MEF, discovery message from a first virtual machine (41) that wishes to register with the first LER (11);
updating means that updates its own virtual machine binding database to reflect binding of the first virtual machine (41) to the first LER (11), wherein the updating means updates its own virtual machine binding database to reflect the binding of the first virtual machine (41) to the first LER (11) when finding that the virtual machine identifier, VMID, contained in the MEF discovery message falls within an IP address range for supporting the migration of virtual machines; and
MEF advertisement message sending means that sends a MEF advertisement message to the first virtual machine (41) to indicate that the first LER (11) completes the registration of the first virtual machine (41).

9. A method for supporting migration of virtual machines across multiprotocol label switching network (100), comprising the steps of:
a first area route reflector, ARR, (1) receiving a virtual machine binding update message from a first label edge outer, LER, (11) located in an area (101) of the first ARR (1), the virtual machine binding update message indicating that the first virtual machine (41) is bound to the first LER (11), wherein the first LER (11) updates its own virtual machine binding database to reflect the binding of the first virtual machine (41) to the first LER (11) when the first LER (11) finds that the virtual machine identifier, VMID, contained in the MEF discovery message falls within an IP address range for supporting the migration of virtual machines;
the first ARR (1) updating its own virtual machine binding database based on the received virtual machine binding update message to reflect the binding of the first virtual machine (41) to the first LER (11).

10. The method according to claim 9, further comprising the steps of:
the first ARR (1) receiving a first virtual machine binding query message from the first LER (11), wherein the first virtual machine binding query message is intended to obtain the binding of a second virtual machine (43); and
the first ARR (1) sending a first virtual machine binding query advertisement message to the first LER (11) to notify the first LER (11) of the binding of the second virtual machine (43) to a corresponding LER (31); or
the first ARR (1) receiving a second virtual machine binding query message from a second ARR (3), wherein the second virtual machine binding query message is intended to obtain the binding of the first virtual machine (41); and
the first ARR (1) sending a second virtual machine binding query advertisement message to the second ARR (3) to notify the second ARR (3) of the binding of the first virtual machine (41).

11. The method according to claim 10, further comprising the step of:
the first ARR (1) sending a first virtual machine binding database advertisement message to the first LER (11) to notify the first LER (11) of the migration of the second virtual machine (43) between respective ones of LERs.

12. The method according to claim 10, further comprising the step of:
the first ARR (1) sending a second virtual machine binding database advertisement message to the second ARR (3) to notify the second ARR (3) of the migration of the first virtual machine (41) between respective ones of LERs.

13. The method according to claim 9, further comprising the steps of:
the first ARR (1) sending a virtual machine binding update message to a third ARR (2), the virtual machine binding update message indicating that the first virtual machine (41) is migrated from one LER (22) in an area (102) served by the third ARR (2) to the first LER (11); and
the first ARR (1) receiving a second virtual machine binding database advertisement message from the third ARR (2), the second virtual machine binding database advertisement message indicating a query log about the first virtual machine (41).

14. The method according to claim 9, further comprising the steps of:
the first ARR (1) receiving a virtual machine binding update message from a fourth ARR, the virtual machine binding update message indicating that the first virtual machine (41) is migrated from the first LER (11) to one LER in an area served by the fourth ARR;
the first ARR (1) updating its own virtual machine binding database to reflect that the first virtual machine (41) is migrated from the first LER (11) to the one LER in the area served by the fourth ARR; and
the first ARR (1) sending a second virtual machine binding database advertisement message to the fourth ARR to notify the fourth ARR of a query log about the first virtual machine (41).

15. A first area route reflector, ARR, (1) of supporting migration of virtual machines across multiprotocol label switching network (100), comprising:
virtual machine binding update message receiving means that receives a virtual machine binding update message from a first label edge router, LER, (11) located in an area (101) of the first ARR (1), the virtual machine binding update message indicating that the first virtual machine (41) is bound to the first LER (11), wherein the first LER (11) updates its own virtual machine binding database to reflect the binding of the first virtual machine (41) to the first LER (11) when the first LER (11) finds that the virtual machine identifier, VMID, contained in the MEF discovery message falls within an IP address range for supporting the migration of virtual machines; and
updating means that updates its own virtual machine binding database based on the received virtual machine binding update message to reflect the binding of the first virtual machine (41) to the first LER (11).

## Patentansprüche

1. Verfahren zum Unterstützen einer Migration virtueller Maschinen über ein "Multiprotocol Label Switching"-Netz (100), das die folgenden Schritte umfasst:
Empfangen durch einen ersten "Label Edge"-Router, LER, (11) einer Migrationsaktivierungsfunktions-Auffindungsnachricht, MEF-Auffindungsnachricht, von einer ersten virtuellen Maschine (41), die sich bei dem ersten LER (11) registrieren möchte;
Aktualisieren durch den ersten LER (11) seiner eigenen Datenbank von Bindungen virtueller Maschinen, um eine Bindung der ersten virtuellen Maschine (41) an den ersten LER (11) zu reflektieren; und
Senden durch den ersten LER (11) einer MEF-Anzeigenachricht an die erste virtuelle Maschine (41), um anzugeben, dass der erste LER (11) die Registrierung der ersten virtuellen Maschine (41) abschließt,
wobei der erste LER (11) seine eigene Datenbank von Bindungen virtueller Maschinen aktualisiert, um die Bindung der ersten virtuellen Maschine (41) an den ersten LER (11) zu reflektieren, wenn der erste LER (11) findet, dass die in der MEF-Auffindungsnachricht enthaltene Kennung einer virtuellen Maschine, VMID, in einen IP-Adressenbereich zum Unterstützen der Migration virtueller Maschinen fällt.

2. Verfahren nach Anspruch 1, das ferner den folgenden Schritt umfasst:
Senden durch den ersten LER (11) einer Aktualisierungsnachricht einer Bindung einer virtuellen Maschine an einen ersten Bereichsroutenreflektor, ARR, (1) eines Bereichs (101), wo sich der erste LER (11) befindet, so dass der erste ARR (1) seine eigene Datenbank von Bindungen virtueller Maschinen aktualisieren kann, um die Bindung der ersten virtuellen Maschine (41) an den ersten LER (11) zu reflektieren.

3. Verfahren nach Anspruch 1, das ferner den folgenden Schritt umfasst:
Senden durch den ersten LER (11) einer Aktualisierungsnachricht einer Bindung einer virtuellen Maschine an einen dritten LER (22), bei dem die erste virtuelle Maschine (41) vor dem Registrieren mit den ersten LER (11) zuletzt registriert wurde, derart, dass der dritte LER (22) seine eigene Datenbank von Bindungen virtueller Maschinen aktualisieren kann, um die Bindung der ersten virtuellen Maschine (41) an den ersten LER (11) zu reflektieren.

4. Verfahren nach Anspruch 3, das ferner den folgenden Schritt umfasst:
Weiterleiten durch den ersten LER (11) von Datenpaketen, die von der ersten virtuellen Maschine (41) empfangen werden, an einen zweiten LER (31), mit dem ein Client (53) verbunden ist; oder
Weiterleiten durch den ersten LER (11) an die erste virtuelle Maschine (41) von Datenpaketen, die von dem dritten LER (22) empfangen werden, bei dem die erste virtuelle Maschine (41) vor dem Registrieren mit dem ersten LER (11) zuletzt registriert wurde; oder
Weiterleiten durch den ersten LER (11) an die erste virtuelle Maschine (41) von Datenpaketen, die von einem zweiten LER (31) empfangen werden, mit dem ein Client (53) verbunden ist;
wobei die Datenpakete jeweils anhand von Weiterleitungsäquivalenzklassen der Datenpakete weitergeleitet werden, wobei die Weiterleitungsäquivalenzklasse der Datenpakete, die für die erste virtuelle Maschine (41) bestimmt sind, anhand einer IP-Adresse des LER, bei dem die erste virtuelle Maschine (41) registriert ist, anstelle einer IP-Adresse der ersten virtuellen Maschine (41) selbst durch einen Eingangs-LER für das Datenpaket bestimmt wird.

5. Verfahren nach Anspruch 1, das ferner den folgenden Schritt umfasst:
Empfangen durch den LER (11) einer Aktualisierungsnachricht einer Bindung einer virtuellen Maschine von einem vierten LER (12), bei dem die erste virtuelle Maschine (41) zuletzt registriert wurde, nachdem sie bei dem ersten LER (11) registriert wurde, und Aktualisieren durch den LER (11) seiner eigenen Datenbank von Bindungen virtueller Maschinen, um die Bindung der ersten virtuellen Maschine (41) an den vierten LER (12) zu reflektieren.

6. Verfahren nach Anspruch 1, das ferner die folgenden Schritte umfasst:
Senden durch den ersten LER (11) einer ersten Abfragenachricht einer Bindung einer virtuellen Maschine an einen ersten ARR (1) eines Bereichs (101), wo sich der erste LER (11) befindet, um die Bindung einer zweiten virtuellen Maschine (43) zu erhalten, wobei ein Client (51), der mit dem ersten LER (11) verbunden ist, die Datenpakete an die zweite virtuelle Maschine (43) senden möchte;
Empfangen durch den ersten LER (11) einer Anzeigenachricht einer Abfrage einer Bindung einer virtuellen Maschine von dem ersten ARR (1) des Bereichs (101), wo sich der erste LER (11) befindet, und Aktualisieren durch den ersten LER (11) seiner eigenen Datenbank von Bindungen virtueller Maschinen aktualisiert, um die Bindung der zweiten virtuellen Maschine (43) an einen entsprechenden LER (31) zu reflektieren.

7. Verfahren nach Anspruch 6, das ferner den folgenden Schritt umfasst:
Empfangen durch den LER (11) einer ersten Anzeigenachricht einer Datenbank von Bindungen virtueller Maschinen von dem ersten ARR (1) des Bereichs (101), wo sich der erste LER (11) befindet, und Aktualisieren durch den LER (11) seiner eigenen Datenbank von Bindungen virtueller Maschinen, um die Migration der zweiten virtuellen Maschine (43) zwischen dem ersten LER (11) und dem entsprechenden LER (31) zu reflektieren.

8. Erster "Label Edge"-Router, LER, (11) zum Unterstützen einer Migration virtueller Maschinen über ein "Multiprotocol Label Switching"-Netz (100), der Folgendes umfasst:
Mittel zum Empfangen einer Migrationsaktivierungsfunktions-Auffindungsnachricht, die eine Migrationsaktivierungsfunktions-Auffindungsnachricht, MEF-Auffindungsnachricht, von einer ersten virtuellen Maschine (41) empfangen, die sich bei dem ersten LER (11) registrieren möchte;
Aktualisierungsmittel, die ihre eigene Datenbank von Bindungen virtueller Maschinen aktualisieren, um eine Bindung der ersten virtuellen Maschine (41) an den ersten LER (11) zu reflektieren, wobei die Aktualisierungsmittel ihre eigene Datenbank von Bindungen virtueller Maschinen aktualisieren, um die Bindung der ersten virtuellen Maschine (41) an den ersten LER (11) zu reflektieren, wenn festgestellt wird, dass die in der MEF-Auffindungsnachricht enthaltene Kennung einer virtuellen Maschine, VMID, in einen IP-Adressenbereich zum Unterstützen der Migration virtueller Maschinen fällt; und
MEF-Anzeigenachrichtensendemittel, die eine MEF-Anzeigenachricht an die erste virtuelle Maschine (41) senden, um anzugeben, dass der erste LER (11) die Registrierung der ersten virtuellen Maschine (41) abschließt.

9. Verfahren zum Unterstützen einer Migration virtueller Maschinen über ein "Multiprotocol Label Switching"-Netz (100), das die folgenden Schritte umfasst:
Empfangen durch einen ersten Bereichsroutenreflektor, ARR, (1) einer Aktualisierungsnachricht einer Bindung einer virtuellen Maschine von einem ersten "Label Edge"-Router, LER, (11), der sich in einem Bereich (101) des ersten ARR (1) befindet, wobei die Aktualisierungsnachricht eine Bindung einer virtuellen Maschine angibt, dass die erste virtuelle Maschine (41) an den ersten LER (11) gebunden ist, wobei der erste LER (11) seine eigene Datenbank von Bindungen virtueller Maschinen aktualisiert, um die Bindung der ersten virtuellen Maschine (41) an den ersten LER (11) zu reflektieren, wenn der erste LER (11) feststellt, dass die in der MEF-Auffindungsnachricht enthaltene Kennung einer virtuellen Maschine, VMID, in einen IP-Adressenbereich zum Unterstützen der Migration virtueller Maschinen fällt;
Aktualisieren durch den ersten ARR (1) seiner eigenen Datenbank von Bindungen virtueller Maschinen anhand der empfangenen Aktualisierungsnachricht einer Bindung einer virtuellen Maschine aktualisiert, um die Bindung der ersten virtuellen Maschine (41) an den ersten LER (11) zu reflektieren.

10. Verfahren nach Anspruch 9, das ferner die folgenden Schritte umfasst:
Empfangen durch den ersten ARR (1) einer ersten Abfragenachricht einer Bindung einer virtuellen Maschine von dem ersten LER (11), wobei die erste Abfragenachricht einer Bindung einer virtuellen Maschine dazu vorgesehen ist, die Bindung einer zweiten virtuellen Maschine (43) zu erhalten; und
Senden durch den ersten ARR (1) einer ersten Anzeigenachricht einer Abfrage einer Bindung einer virtuellen Maschine an den ersten LER (11), um den ersten LER über die Bindung der zweiten virtuellen Maschine an einen entsprechenden LER (31) zu benachrichtigen; oder
Empfangen durch den ersten ARR (1) einer zweiten Abfragenachricht einer Bindung einer virtuellen Maschine von einem zweiten ARR (3), wobei die zweite Abfragenachricht einer Bindung einer virtuellen Maschine dazu vorgesehen ist, die Bindung der ersten virtuellen Maschine (41) zu erhalten; und
Senden durch den ersten ARR (1) einer zweiten Anzeigenachricht einer Abfrage einer Bindung einer virtuellen Maschine an den zweiten ARR (3), um den zweiten ARR (3) über die Bindung der ersten virtuellen Maschine (41) zu benachrichtigen.

11. Verfahren nach Anspruch 10, das ferner den folgenden Schritt umfasst:
Senden durch den ersten ARR (1) einer ersten Anzeigenachricht einer Datenbank von Bindungen virtueller Maschinen an den ersten LER (11), um den ersten LER (11) über die Migration der zweiten virtuellen Maschine (43) zwischen jeweiligen der LERs zu benachrichtigen.

12. Verfahren nach Anspruch 10, das ferner den folgenden Schritt umfasst:
Senden durch den ersten ARR (1) einer zweiten Anzeigenachricht einer Datenbank von Bindungen virtueller Maschinen an den zweiten ARR (3), um den zweiten ARR (3) über die Migration der ersten virtuellen Maschine (41) zwischen jeweiligen der LERs zu benachrichtigen.

13. Verfahren nach Anspruch 9, das ferner die folgenden Schritte umfasst:
Senden durch den ARR (1) einer Aktualisierungsnachricht einer Bindung einer virtuellen Maschine an einen dritten ARR (2), wobei die Aktualisierungsnachricht einer Bindung einer virtuellen Maschine angibt, dass die erste virtuelle Maschine (41) von einem LER (22) in einem durch den dritten ARR (2) bedienten Bereich zu dem ersten LER (11) migriert ist; und
Empfangen durch den ersten ARR (1) einer zweiten Anzeigenachricht einer Datenbank von Bindungen virtueller Maschinen von dem dritten ARR (2), wobei die zweite Anzeigenachricht einer Datenbank von Bindungen virtueller Maschinen ein Abfrageprotokoll über die erste virtuelle Maschine (41) angibt.

14. Verfahren nach Anspruch 9, das ferner die folgenden Schritte umfasst:
Empfangen durch den ersten ARR (1) einer Aktualisierungsnachricht einer Bindung einer virtuellen Maschine von einem vierten ARR, wobei die Aktualisierungsnachricht einer Bindung einer virtuellen Maschine angibt, dass die erste virtuelle Maschine (41) von dem ersten LER (11) zu einem LER in einem durch den vierten ARR bedienten Bereich migriert ist;
Aktualisieren durch den ersten ARR (1) seiner eigenen Datenbank von Bindungen virtueller Maschinen, um zu reflektieren, dass die erste virtuelle Maschine (41) von dem ersten LER (11) zu dem einen LER in dem durch den vierten ARR bedienten Bereich migriert ist; und
Senden durch den ersten ARR (1) einer zweiten Anzeigenachricht einer Datenbank von Bindungen virtuellen Maschinen an den vierten ARR, um den vierten ARR über ein Abfrageprotokoll über die erste virtuelle Maschine (41) zu benachrichtigen.

15. Erster Bereichsroutenreflektor, ARR, (1) des Unterstützens einer Migration virtueller Maschinen über ein "Multiprotocol Label Switching"-Netz (100), der Folgendes umfasst:
Mittel zum Empfangen einer Aktualisierungsnachricht einer Bindung einer virtuellen Maschine, die eine Aktualisierungsnachricht einer Bindung einer virtuellen Maschine von einem ersten "Label Edge"-Router, LER, (11), der sich in einem Bereich (10) des ersten ARR (1) befindet, empfangen, wobei die Aktualisierungsnachricht einer Bindung einer virtuellen Maschine angibt, dass die erste virtuelle Maschine (41) an den ersten LER (11) gebunden ist, wobei der erste LER (11) seine eigene Datenbank von Bindungen virtueller Maschinen aktualisiert, um die Bindung der ersten virtuellen Maschine (41) an den ersten LER (11) zu reflektieren, wenn der erste LER (11) feststellt, dass die in der MEF-Auffindungsnachricht enthaltene Kennung einer virtuellen Maschine, VMID, in einen IP-Adressenbereich zum Unterstützen der Migration virtueller Maschinen fällt; und
Aktualisierungsmittel, die ihre eigene Datenbank von Bindungen virtueller Maschinen anhand der empfangenen Aktualisierungsnachricht einer Bindung einer virtuellen Maschine aktualisieren, um die Bindung der ersten virtuellen Maschine (41) an den ersten LER (11) zu reflektieren.

## Revendications

1. Procédé pour supporter la migration de machines virtuelles à travers un réseau de commutation d'étiquettes multiprotocole (100), comprenant :
un premier routeur périphérique d'étiquettes, LER, (11) recevant un message de découverte de fonction d'activation de migration, MEF, d'une première machine virtuelle (41) qui souhaite s'enregistrer auprès du premier LER (11) ;
le premier LER (11) mettant à jour sa propre base de données de liaison de machine virtuelle pour refléter la liaison de la première machine virtuelle (41) au premier LER (11) ; et
le premier LER (11) envoyant un message d'annonce de MEF à la première machine virtuelle (41) pour indiquer que le premier LER (11) termine l'enregistrement de la première machine virtuelle (41),
où le premier LER (11) met à jour sa propre base de données de liaison de machine virtuelle pour refléter la liaison de la première machine virtuelle (41) au premier LER (11) lorsque le premier LER (11) trouve que l'identifiant de machine virtuelle, VMID, contenu dans le message de découverte de MEF se situe dans une plage d'adresses IP pour supporter la migration de machines virtuelles.

2. Procédé selon la revendication 1, comprenant en outre :
le premier LER (11) envoyant un message de mise à jour de liaison de machine virtuelle à un premier réflecteur de route de zone, ARR, (1) d'une zone (101) où le premier LER (11) est situé, de sorte que le premier ARR (1) puisse mettre à jour sa propre base de données de liaison de machine virtuelle pour refléter la liaison de la première machine virtuelle (41) au premier LER (11).

3. Procédé selon la revendication 1, comprenant en outre :
le premier LER (11) envoyant un message de mise à jour de liaison de machine virtuelle à un troisième LER (22) auprès duquel la première machine virtuelle (41) a été enregistrée en dernier lieu avant l'enregistrement auprès du premier LER (11), de sorte que le troisième LER (22) puisse mettre à jour sa propre base de données de liaison de machine virtuelle pour refléter la liaison de la première machine virtuelle (41) au premier LER (11).

4. Procédé selon la revendication 3, comprenant en outre :
le premier LER (11) transférant des paquets de données reçus de la première machine virtuelle (41) vers un deuxième LER (31) auquel un client (53) est connecté ; ou
le premier LER (11) transférant, vers la première machine virtuelle (41), des paquets de données reçus du troisième LER (22) auprès duquel la première machine virtuelle (41) a été enregistrée en dernier lieu avant l'enregistrement auprès du premier LER (11) ; ou
le premier LER (11) transférant, vers la première machine virtuelle (41), des paquets de données reçus d'un deuxième LER (31) auquel un client (53) est connecté ;
où les paquets de données sont respectivement transférés sur la base de classes d'équivalence de transfert des paquets de données, où la classe d'équivalence de transfert du paquet de données destiné à la première machine virtuelle (41) est déterminée, par un LER d'entrée pour le paquet de données, sur la base d'une adresse IP du LER auprès duquel la première machine virtuelle (41) est enregistrée, au lieu d'une adresse IP de la première machine virtuelle (41) elle-même.

5. Procédé selon la revendication 1, comprenant en outre :
le premier LER (11) recevant un message de mise à jour de liaison de machine virtuelle d'un quatrième LER (12) auprès duquel la première machine virtuelle (41) a été enregistrée en dernier lieu après avoir été enregistrée auprès du premier LER (11), et mettant à jour sa propre base de données de liaison de machine virtuelle pour refléter la liaison de la première machine virtuelle (41) au quatrième LER (12).

6. Procédé selon la revendication 1, comprenant en outre :
le premier LER (11) envoyant un premier message de requête de liaison de machine virtuelle à un premier ARR (1) d'une zone (101) où le premier LER (11) est situé pour obtenir la liaison d'une seconde machine virtuelle (43), où un client (51) connecté au premier LER (11) souhaite envoyer les paquets de données à la seconde machine virtuelle (43) ;
le premier LER (11) recevant un premier message d'annonce de requête de liaison de machine virtuelle provenant du premier LER (1) de la zone (101) où se trouve le premier LER (11), et mettant à jour sa propre base de données de liaison de machine virtuelle pour refléter la liaison de la seconde machine virtuelle (43) à un LER (31) correspondant.

7. Procédé selon la revendication 6, comprenant en outre :
le premier LER (11) recevant un premier message d'annonce de base de données de liaison de machine virtuelle depuis le premier ARR (1) de la zone (101) où se trouve le premier LER (11), et mettant à jour sa propre base de données de liaison de machine virtuelle pour refléter la migration de la seconde machine virtuelle (43) entre le premier LER (11) et le LER correspondant (31).

8. Premier routeur périphérique d'étiquettes, LER, (11) de support de migration de machines virtuelles à travers un réseau de commutation d'étiquettes multiprotocole (100), comprenant :
des moyens de réception de message de découverte de fonction d'activation de migration, MEF, qui reçoit un message de découverte de fonction d'activation de migration, MEF, depuis une première machine virtuelle (41) qui souhaite s'enregistrer auprès du premier LER (11) ;
des moyens de mise à jour qui mettent à jour leur propre base de données de liaison de machine virtuelle pour refléter la liaison de la première machine virtuelle (41) au premier LER (11), où les moyens de mise à jour mettent à jour leur propre base de données de liaison de machine virtuelle pour refléter la liaison de la première machine virtuelle (41) au premier LER (11) lorsqu'il est trouvé que l'identifiant de machine virtuelle, VMID, contenu dans le message de découverte de MEF se situe dans une plage d'adresses IP pour supporter la migration des machines virtuelles ; et
des moyens d'envoi de message d'annonce de MEF qui envoient un message d'annonce de MEF à la première machine virtuelle (41) pour indiquer que le premier LER (11) a terminé l'enregistrement de la première machine virtuelle (41).

9. Procédé pour supporter la migration de machines virtuelles à travers un réseau de commutation d'étiquettes multiprotocole (100), comprenant :
un premier réflecteur de route de zone, ARR, (1) recevant un message de mise à jour de liaison de machine virtuelle provenant d'un premier routeur périphérique d'étiquettes, LER, (11) situé dans une zone (101) du premier ARR (1), le message de mise à jour de liaison de machine virtuelle indiquant que la première machine virtuelle (41) est liée au premier LER (11), où le premier LER (11) met à jour sa propre base de données de liaison de machine virtuelle pour refléter la liaison de la première machine virtuelle (41) au premier LER (11) lorsque le premier LER (11) trouve que l'identifiant de machine virtuelle, VMID, contenu dans le message de découverte de MEF se situe dans une plage d'adresses IP pour supporter la migration de machines virtuelles ;
le premier ARR (1) mettant à jour sa propre base de données de liaison de machine virtuelle sur la base du message de mise à jour de liaison de machine virtuelle reçu pour refléter la liaison de la première machine virtuelle (41) au premier LER (11).

10. Procédé selon la revendication 9, comprenant en outre :
le premier ARR (1) recevant un premier message de requête de liaison de machine virtuelle provenant du premier LER (11), où le premier message de requête de liaison de machine virtuelle est destiné à obtenir la liaison d'une seconde machine virtuelle (43) ; et
le premier ARR (1) envoyant un premier message d'annonce de requête de liaison de machine virtuelle au premier LER (11) pour notifier au premier LER (11) la liaison de la seconde machine virtuelle (43) à un LER correspondant (31) ; ou
le premier ARR (1) recevant un second message de requête de liaison de machine virtuelle provenant d'un deuxième ARR (3), où le second message de requête de liaison de machine virtuelle est destiné à obtenir la liaison de la première machine virtuelle (41) ; et
le premier ARR (1) envoyant un second message d'annonce de requête de liaison de machine virtuelle au deuxième ARR (3) pour notifier au deuxième ARR (3) la liaison de la première machine virtuelle (41).

11. Procédé selon la revendication 10, comprenant en outre :
le premier ARR (1) envoyant un premier message d'annonce de base de données de liaison de machine virtuelle au premier LER (11) pour notifier au premier LER (11) la migration de la seconde machine virtuelle (43) entre des LER respectifs parmi les LER.

12. Procédé selon la revendication 10, comprenant en outre :
le premier ARR (1) envoyant un second message d'annonce de base de données de liaison de machine virtuelle au deuxième ARR (3) pour notifier au deuxième ARR (3) la migration de la première machine virtuelle (41) entre des LER respectifs parmi les LER.

13. Procédé selon la revendication 9, comprenant en outre :
le premier ARR (1) envoyant un message de mise à jour de liaison de machine virtuelle à un troisième ARR (2), le message de mise à jour de liaison de machine virtuelle indiquant que la première machine virtuelle (41) a migré d'un LER (22) dans une zone (102) desservie par le troisième ARR (2) vers le premier LER (11) ; et
le premier ARR (1) recevant un deuxième message d'annonce de base de données de liaison de machine virtuelle provenant du troisième ARR (2), le deuxième message d'annonce de base de données de liaison de machine virtuelle indiquant un journal de requêtes concernant la première machine virtuelle (41).

14. Procédé selon la revendication 9, comprenant en outre :
le premier ARR (1) recevant un message de mise à jour de liaison de machine virtuelle provenant d'un quatrième ARR, le message de mise à jour de liaison de machine virtuelle indiquant que la première machine virtuelle (41) a migré du premier LER (11) vers un LER dans une zone servie par le quatrième ARR ;
le premier ARR (1) mettant à jour sa propre base de données de liaison de machine virtuelle pour refléter la migration de la première machine virtuelle (41) depuis le premier LER (11) vers le LER situé dans la zone desservie par le quatrième ARR ; et
le premier ARR (1) envoyant un second message d'annonce de base de données de liaison de machine virtuelle au quatrième ARR pour notifier au quatrième ARR un journal de requêtes concernant la première machine virtuelle (41) .

15. Premier réflecteur de route de zone, ARR, (1) de support de migration de machines virtuelles à travers un réseau de commutation d'étiquettes multiprotocole (100), comprenant :
des moyens de réception de message de mise à jour de liaison de machine virtuelle qui reçoivent un message de mise à jour de liaison de machine virtuelle depuis un premier routeur périphérique d'étiquettes, LER, (11) situé dans une zone (101) du premier ARR (1), le message de mise à jour de liaison de machine virtuelle indiquant que la première machine virtuelle (41) est liée au premier LER (11), où le premier LER (11) met à jour sa propre base de données de liaison de machine virtuelle pour refléter la liaison de la première machine virtuelle (41) au premier LER (11) lorsque le premier LER (11) trouve que l'identifiant de machine virtuelle, VMID, contenu dans le message de découverte de MEF se situe dans une plage d'adresses IP pour supporter la migration des machines virtuelles ; et
des moyens de mise à jour qui mettent à jour leur propre base de données de liaison de machine virtuelle sur la base du message de mise à jour de liaison de machine virtuelle reçu pour refléter la liaison de la première machine virtuelle (41) au premier LER (11).
